(19) Europäisches Patentamt
European Patent Office
Office européen des brevets

(11) **EP 3 346 526 A1**

(12) **EUROPEAN PATENT APPLICATION**
published in accordance with Art. 153(4) EPC

(43) Date of publication:
**11.07.2018 Bulletin 2018/28**

(21) Application number: **16842149.3**

(22) Date of filing: **16.08.2016**

(51) Int Cl.:
*H01M 4/134* (2010.01)       *H01M 4/62* (2006.01)
*H01M 4/38* (2006.01)        *H01M 4/139* (2010.01)
*H01M 4/04* (2006.01)        *H01M 4/80* (2006.01)

(86) International application number:
**PCT/KR2016/008990**

(87) International publication number:
**WO 2017/039183 (09.03.2017 Gazette 2017/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.09.2015 KR 20150123857**

(71) Applicants:
• **Jenax Inc.
Busan 47301 (KR)**
• **Hanbat National University Industry-Academic
Cooperation Foundation
Daejeon 34158 (KR)**

(72) Inventors:
• **LEE, Yong Min
Daejeon 34177 (KR)**
• **RYOU, Myung Hyun
Daejeon 34158 (KR)**
• **SONG, Seong Hyun
Daejeon 34984 (KR)**
• **CHO, In Seong
Daejeon 35397 (KR)**
• **KIM, Chang Hyeon
Gongju-si
Chungcheongnam-do 32621 (KR)**

(74) Representative: **Platzöder, Michael Christian
Wallinger Ricker Schlotter Tostmann
Patent- und Rechtsanwälte Partnerschaft mbB
Zweibrückenstrasse 5-7
80331 München (DE)**

(54) **ELECTRODE FOR SECONDARY BATTERY AND MANUFACTURING METHOD THEREFOR**

(57)    The present invention relates to a secondary battery technique, and more particularly, a binder-free electrode for a secondary battery and a method of manufacturing the same. The electrode includes a nonwoven fabric type current collector including a plurality of metal fibers that form continuous pores from a surface of the nonwoven fabric type current collector to the interior of the nonwoven fabric type current collector, are randomly arranged, and physically contact one another; a silicon-containing active material layer formed on the metal fiber; and an attachment layer between the metal fiber and the silicon-containing active material layer.

*FIG. 2A*

EP 3 346 526 A1

**Description**

## TECHNICAL FIELD

The present invention relates to a secondary battery technique, and more particularly, a binder-free electrode for a secondary battery and a method of manufacturing the same.

## BACKGROUND ART

A secondary battery is a battery that may be charged and discharged by using an electrode material having excellent reversibility. Typically, a lithium secondary battery has been commercialized. The lithium secondary battery may be used not only as a small power source for small IT devices, such as a smart phone, a portable computer, and an electronic paper, but also as a medium to large power source mounted on a means of transportation, such as an automobile, or is also expected to be applied to a power storage of a power supply network, such as a smart grid.

When a lithium metal is used as a negative electrode material of a lithium secondary battery, a short-circuit of the battery may occurs due to formation of dendrites or the battery may explode. Therefore, a negative electrode generally includes crystalline carbon, such as graphite or artificial graphite, soft carbon, hard carbon, and carbon-based active material which lithium may be intercalated to and de-intercalated from. However, as secondary batteries are applied in wider range of fields, there is a demand for higher capacity and higher output power of secondary batteries. Therefore, non-carbon-based negative electrode materials that may be alloyed with lithium and have capacities equal to or greater than 372 mAh/g, such as silicon (Si), tin (Sn), or aluminum (Al), are being spotlighted for replacing carbon-based negative electrode having capacity of 372 mAh/g.

From among such non-carbon-based negative electrode materials, silicon exhibits the largest theoretical capacity of about 4,200 mAh/g, and thus practical application thereof is very important in terms of capacity. However, when silicon is charged, the volume of silicon increases by four times as much as that of silicon when silicon is discharged, an electrical connection between active materials is broken due to a volume change based on repetitive charging and discharging processes or an active material is exfoliated from a current collector, an irreversible reaction, such as formation of a solid electrolyte interface (SEI) like $Li_2O$, occurs due to erosion of the active material by an electrolyte, the electrolyte is consumed, and lifetime of a battery is deteriorated. Therefore, it is difficult to embody a silicon-based negative electrode.

## DISCLOSURE OF THE INVENTION

### TECHNICAL PROBLEM

Therefore, the present invention provides, for practical application of a new high capacity active material having a large volume expansion rate, an electrode for a high capacity secondary battery with improved lifetime, in which desorption and pulverization of an active material is suppressed so as to suppress irreversible reactions in the battery.

The present invention also provides a method of manufacturing an electrode for a secondary battery having the above-described advantages.

### TECHNICAL SOLUTION

According to an aspect of the present invention, there is provided an electrode of a secondary battery, the electrode including a nonwoven fabric type current collector including a plurality of metal fibers that form continuous pores from a surface of the nonwoven fabric type current collector to the interior of the nonwoven fabric type current collector, are randomly arranged, and physically contact one another; a silicon-containing active material layer formed on the metal fiber; and an attachment layer between the metal fiber and the silicon-containing active material layer.

According to an embodiment, the attachment layer may include a metal layer, a metal compound layer, or a laminated structure thereof. The metal layer may include any one selected from a group consisting of antimony (Sb), zinc (Zn), germanium (Ge), aluminum (Al), copper (Cu), bismuth (Bi), cadmium (Cd), magnesium (Mg), cobalt (Co), arsenic (As), gallium (Ga), lead (Pb), and iron (Fe) or an intermetallic compound thereof.

According to an embodiment, the attachment layer may include a carbon layer or a carbon isotropic layer. The carbon isotropic layer may include fullerenes, carbon nanotubes, graphene, or graphite. The attachment layer may have a thickness from 0.01 $\mu$m to 20 $\mu$m. The attachment layer may be deposited via sputtering through the pores.

The silicon-containing active material layer may include silicon, any one selected from a group consisting of antimony (Sb), zinc (Zn), germanium (Ge), aluminum (Al), copper (Cu), bismuth (Bi), cadmium (Cd), magnesium (Mg), cobalt (Co), arsenic (As), gallium (Ga), lead (Pb), and iron (Fe), or a compound thereof. The silicon-containing active material layer may be plasma-deposited, and the size of the pores may be greater than the size of a sheath of plasma. According to an embodiment, the size of the pores may be from 0.01 mm to 2 mm.

The diameter of the metal fibers may be from 1 $\mu$m to 200 $\mu$m. The metal fibers may include any one of stainless steel, iron, aluminum, copper, nickel, chromium, titanium, vanadium, tungsten, manganese, cobalt, zinc, ruthenium, lead, iridium, antimony, platinum, silver, gold, and alloys thereof. The electrode may further include an interface controlling layer formed on the silicon-containing active material layer against an electrolyte.

The interface controlling layer may include any one of a metal, an oxide of the metal, carbon, and a carbon isotope or a mixture thereof. The metal may include any one selected from a group consisting of tin (Sn), antimony (Sb), zinc (Zn), germanium (Ge), aluminum (Al), copper (Cu), bismuth (Bi), cadmium (Cd), magnesium (Mg), cobalt (Co), arsenic (As), gallium (Ga), lead (Pb), and iron (Fe) or an intermetallic compound thereof, and the carbon isotropic layer may include fullerenes, carbon nanotubes, or graphene.

According to an aspect of the present invention, there is provided a method of manufacturing an electrode for a secondary battery, the method including providing a nonwoven fabric type current collector including metal fibers that form pores in a plasma reactor; depositing an attachment layer on the metal fiber via the pores; and depositing a silicon-containing active material layer on the attachment layer through the pores by using a sputtering method using plasma. The nonwoven fabric type current collector may be levitated in the plasma reactor, such that all of major surfaces of the nonwoven fabric type current collector facing each other are exposed to plasma.

According to an embodiment, the size of the pores may be greater than the size of a sheath of plasma. The size of the pores may be from 0.01 mm to 2 mm. An average diameter of the metal fibers may be from 1 $\mu$m to 200 $\mu$m. According to an embodiment, the method may further include forming an interface controlling layer on the silicon-containing active material layer against an electrolyte.

## EFFECT OF THE INVENTION

According to an embodiment of the present invention, silicon-containing active material layers are formed on a plurality of metal fibers constituting a nonwoven fabric type current collector, and an attachment layer is formed between the plurality of metal fibers and the silicon-containing active material layers. Therefore, desorption and pulverization due to a volume change during charging/discharging of a high-capacity silicon-containing active material having a high volume expansion rate may be suppressed, thereby reducing an irreversible reaction in a battery. As a result, a high capacity battery with improved lifetime may be provided.

Furthermore, according to an embodiment of the present invention, there is provided a high capacity battery with improved lifetime, in which formation of a solid electrolyte interface due to an electrolyte is suppressed or reduced by forming at least one or more interface controlling layers between an electrolyte impregnated into pores formed by the nonwoven fabric type current collector together with or without an attachment layer and the silicon-containing active material layer.

Furthermore, according to another embodiment of the present invention, there is provided a method of manufacturing an electrode for a secondary battery including a silicon-containing active material having the above-described advantages.

## BRIEF DESCRIPTION OF THE DRAWINGS

The above and other features and advantages of the present invention will become more apparent from the following embodiments and the attached drawings in which:

FIG. 1 is a perspective view of a nonwoven fabric type current collector according to an embodiment of the present invention;

FIGS. 2A and 2B are diagrams showing the cross-sectional structures of metal fibers on which an attachment layer and an active material layer are deposited, according to an embodiment of the present invention, respectively;

FIGS. 3A and 3B are diagrams showing cross-sectional structures of the metal fibers for forming nonwoven fabric type current collectors according to other embodiments of the present invention, respectively;

FIGS. 4A and 4B are diagrams showing a plasma reactor for performing methods of manufacturing electrodes for a secondary battery according to various embodiments of the present invention;

FIG. 5 is a cross-sectional diagram for describing an electrochemical reaction of a battery cell employing an electrode according to an embodiment of the present invention;

FIG. 6 shows that an attachment layer is deposited on metal fiber and an active material layer including pure silicon is formed on the attachment layer in a non-radiating shape;

FIG. 7A is a graph showing a discharge characteristic measured by applying a constant current of 300 mA/g to the battery of the Embodiment 1, FIG. 7B is a graph showing a discharge characteristic regarding the Embodiment 2 under the same measurement condition, FIG. 7C is a graph showing a discharge characteristic regarding the Comparative Embodiment under the same measurement condition, and FIG. 7D is a graph showing lifetime characteristics of batteries according to the Embodiments 1 and 2 and the Comparative Embodiment.

## DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art.

Also, in the drawings, thickness and size of each layer are exaggerated for convenience and clarity of explanation, and like reference numerals denote like elements in the drawings. As used herein, the term "and/or" includes any and all combinations of any of listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "includes" and/or "including," when used In the present specification, specify the presence of stated features, integers, steps, operations, elements, and/or components, but do not preclude the presence or addition of one or more other features, integers, steps, operations, elements, components, and/or groups thereof.

It will be understood that although the terms first and second are used herein to describe various elements, these elements should not be limited by these terms. These terms are only used to distinguish one element from another element. Thus, a first element discussed below could be termed a second element, and similarly, a second element may be termed a first element without departing from the teachings of this disclosure.

The present invention provides reduction of exfoliation of a lithium compound layer from a current collector due to increase in volume of the lithium compound layer by improving adhesion between the current collector and a silicon negative electrode active material layer by interposing an interface layer between the current collector and the silicon negative electrode active material layer. Furthermore, the present invention provides prevention of surface cracks and destruction of silicon particles due to an increase in volume of a lithium compound layer by restricting increase of volume of the lithium compound layer by forming a control layer on a silicon negative electrode active material layer.

The term metal fiber in the present specification refers to a linear structure in which a metal is fibrous. The metal fibers exhibit characteristics of a metal, such as a high heat resistance, a high plasticity, and a high electrical conductivity, and exhibits fibrous characteristic that the metal fibers may be processed into a nonwoven structure. Embodiments of the present invention relate to characteristics and advantages for applying the advantages of the metal fibers to an electrode structure of a battery.

The metal fibers may be fabricated by maintaining a metal or an alloy in the form of a melt in a container and spraying the melt into the atmosphere through an injection hole of the container by using a pressurizing device, such as a compressed gas or a piston and rapidly quenching and solidifying the melt. Alternatively, the metal fibers may be fabricated by using a known bundle drawing method. By controlling the number and size of injection holes and/or scattering of the sprayed melt, thickness, uniformity, texture (e.g., nonwoven fabric-like texture), and aspect ratio of metal fibers may be controlled. Metal fibers constituting a battery of the present invention may be fabricated not only by using the above-mentioned fabrication method, but also other known fabrication methods, and the present invention is not limited thereto.

The term 'separating film' as used herein includes a separating film generally used in a liquid electrolyte cell using a liquid electrolyte having a small affinity with the separating film. Furthermore, as used herein, the term "separating film" includes an intrinsic solid polymer electrolyte and/or a gel solid polymer electrolyte in which the electrolyte is strongly bound to the separating film and the electrolyte and the separating film are recognized as identical members. Thus, the separating film should be defined as defined herein.

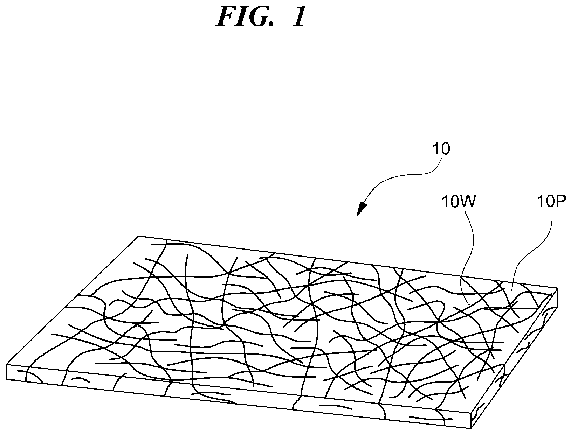

FIG. 1 is a perspective view of a nonwoven fabric type current collector 10 according to an embodiment of the present invention.

Referring to FIG. 1, the nonwoven fabric type current collector 10 includes metal fibers 10W that are randomly arranged to form porosity 10P. The metal fibers 10W may be a plurality of linear structures segmented to have suitable lengths. In embodiments of the present invention, the length and the number of the metal fibers 10W may be appropriately selected according to size and capacity of a battery. For example, the metal fiber 10W may have a thickness in the range from 0.01 $\mu$m to 200 $\mu$m and may have a length in the range from 5 mm to 1000 mm. As the metal fibers 10W may have a thickness in the range from 0.01 $\mu$m to 200 $\mu$m and a length in the range from 5 mm to 1000 mm, the metal fibers 10W constituting a conductive network may depend on one another and form a mechanically self-reliant structure. It is difficult to obtain the mechanically self-reliant structural features from nano-fibers thinner than the thickness range and metal filaments having particle properties shorter than the length range. Due to the mechanically self-reliant structure, the manufacturing process described below and a flexibly battery may be embodied.

The nonwoven fabric type current collector 10 including a 3-dimensional structure of metal fibers 10W having a diameter of 10 $\mu$m has a surface area of about 13 cm$^2$ when the nonwoven fabric type current collector 10 has a circular shape having a diameter of 12 mm, where the surface area is about 6 times greater that the surface area of 2 cm$^2$ of a metal thin-film current collector having a same weight. Therefore, when an active material layer is coated on the metal fibers 10W, the nonwoven fabric type current collector 10 may secure larger contact area with respect to the active material layer as compared to the contact area between the conventional metal thin-film current collector and an active material layer stacked thereon. FIG. 1 shows that the shapes of the metal fibers 10W include straight shapes and curved shapes. However, according to another embodiment, the metal fibers 10W may be formed to have other regular or irregular shapes, such as curled shapes or spiral shapes.

The metal fibers 10W are electrically connected to one another through physical contacts or chemical bonding and form one conductive network. In the present specification, the fact that the metal fibers 10W physically contact one another means that contact points at which the metal fibers 10W contacting one another may be changed. For example, when a battery has flexibility, it is necessary to allow the electrode to be deformed by an external force or an impact applied from the outside to the electrode. In this case, the metal fibers that contact one another and constitute the nonwoven fabric type current collector 10 may be moved and, as a result, contact points at which the metal fibers contact one another may be changed. In the present specification, the fact that the metal fibers 10W are chemically bonded to one another means that the metal fibers 10W are bonded to one another at contact points at which the metal fibers 10W contact one another, and thus the contact points may not be changed.

According to an embodiment, the metal fibers 10W may have a nonwoven structure that the metal fibers 10W are randomly arranged and combined with one another as shown in FIG. 1. The metal fibers 10 are bent or twisted and are tangled with one another to form a mechanically strong low-resistance conductive network having the porosity 10P. In the present specification, the fact that the metal fibers physically contact one another means that the contact points at which the metal fibers 10W contact one another may be moved. For example, when a battery is manufactured by the nonwoven fabric type current collector 10 and the battery is flexible and is deformed by an external force, such as bending force or folding force, the contact points of the metal fibers 10W of the nonwoven fabric type current collector 10 constituting an electrode may be moved. Furthermore, the fact that the metal fibers 10W are chemically bonded to one another means that the metal fibers 10W crossing one another are bonded to one another at the contact points via sintering or a heat treatment, and thus the contact points may not be moved.

According to an embodiment of the present invention, the metal fibers 10W may physically contact one another or may be chemically bonded to one another. As a result, the porosity 10P is formed between the metal fibers 10W, and the porosity 10P may form a passage through which a fluid may flow from the surface of the nonwoven fabric type current collector 10 to the interior of the nonwoven fabric type current collector 10. The metal fibers 10W may include any one of stainless steel, iron, aluminum, copper, nickel, chromium, titanium, vanadium, tungsten, manganese, cobalt, zinc, ruthenium, lead, iridium, antimony, platinum, silver, gold, and alloys thereof. The metal fiber 10W may include two or more different kinds of metals.

According to some embodiments, chemical bonding via formation of an intermetallic compound between the metal fibers may be achieved through an additional process, such as a heat treatment. The metal fibers 10W may be pickled to increase surface roughness thereof to improve adhesion with respect to an active material layer.

According to an embodiment, the nonwoven fabric type current collector 10 may function as a current collector by itself without a separate conductive surface attached thereto, such as a metal foil. In this case, a tab for electric connection to an external circuit may be directly bonded to the outer surface of the nonwoven fabric type current collector 10 In this regard, the metal fibers 10W described above may be distinguished from a nano-structure or a linear structure close to particles, such as carbon nanotubes, that are deposited or grown on a metal foil. In this case, electrochemical reaction regions for charging and discharging may be provided on both the top and bottom surfaces of the nonwoven fabric type current collector 10.

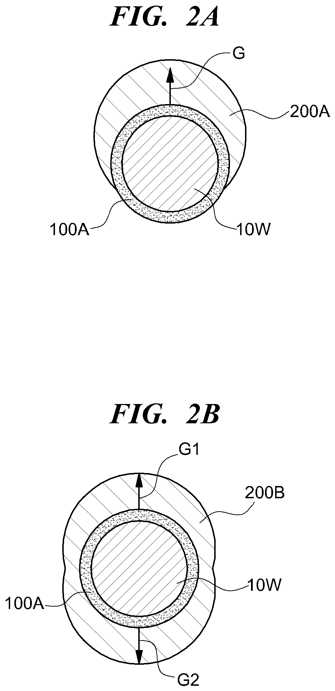

FIGS. 2A and 2B are diagrams showing the cross-sectional structures of the metal fibers 10W on which an attachment layer 100A and an active material layer 200A are deposited, according to an embodiment of the present invention, respectively.

Referring to FIG. 2A, each of the above-described metal fibers 10W includes an attachment layer 100A formed on its surface. A silicon-containing active material layer 2000A is formed on the attachment layer 100A.

The attachment layer 100A may include a metal layer, a metal compound layer, or a laminated structure thereof. The metal layer may include any one selected from a group consisting of antimony (Sb), zinc (Zn), germanium (Ge), aluminum (Al), copper (Cu), bismuth (Bi), cadmium (Cd), magnesium (Mg), cobalt (Co), arsenic (As), gallium (Ga), lead (Pb), and iron (Fe) or an intermetallic compound thereof. According to another embodiment, the attachment layer 100A may include a carbon layer or a carbon isotopic material layer. The carbon isotopic material layer may include fullerenes, carbon nanotubes, graphene, or graphite. However, they are merely examples, and the present invention is not limited thereto.

The attachment layer 100A may be formed on the metal fibers 10W via vapor deposition. For example, the attachment layer 100A may be formed via sputtering using plasma, such that reactive species or ion species of a material constituting the attachment layer 100A that are diffused or drifted through the porosity 10P in FIG. 1 are deposited on the metal fibers 10W. The attachment layer 100A may be formed on the metal fibers 10W from a surface of the nonwoven fabric type current collector 10 to the interior of the nonwoven fabric type current collector 10 in FIG. 1, and the thickness of the attachment layer 100A may be in the range from 0.01 $\mu$m to 20 $\mu$m.

The active material layer 200A formed on the attachment layer 100A may be formed as reactive species or ion species of an active material that are diffused or drifted through the porosity (10P in FIG. 1) are deposited on the attachment layer 100A via a sputtering method using a plasma. Since such a dry deposition process is a binder-free process, internal resistance due to a binder may be reduced and a conductive material is not necessary.

These active material layers 200A may be formed on the attachment layers 100A of the metal fibers 10W from the surface of the nonwoven fabric type current collector 10 to the interior of the nonwoven fabric type current collector (10 of FIG. 1). In case of using a sputtering method, the deposited active material layers 200A may be grown directionally on the metal fibers 10W and may be formed asymmetrically in a particular direction. For example, on the metal fibers 10W, the active material layer 200A may be deposited predominantly in the direction indicated by the arrow G and have an asymmetric shape. In order to obtain such the asymmetrically shaped active material layer 200A, the ionic species that are drifting in the plasma deposition chamber and constitute the active material layer 200A are sufficiently transferred from the surface of the nonwoven fabric type current collector 10 to the interior of the nonwoven fabric type current collector 10. Furthermore, the size (the diameter of a sphere passing through pores) of the porosity 10P of the nonwoven fabric type current collector (10 of FIG. 1) may be greater than the size of a plasma sheath induced during a sputtering for forming the active material layer 200A, such that deposition of the active material layers 200A due to the ion species is dominant to deposition based on diffusion of a material constituting an active material layer. According to an embodiment, the size of the porosity 10P may be in the range from 0.01 mm to 2 mm.

The active material layer 200A may include silicon (Si). According to some embodiments, the active material layer 200A may include any one selected from a group consisting of silicon, antimony (Sb), zinc (Zn), germanium (Ge), aluminum (Al), copper (Cu), bismuth (Bi), cadmium (Cd), magnesium (Mg), cobalt (Co), arsenic (As), gallium (Ga), lead (Pb), and iron (Fe) or a compound thereof. However, they are merely examples, and the present invention is not limited thereto.

Referring to FIG. 2B, an active material layer 200B deposited on the metal fibers 10W having formed thereon the attachment layer 100A may have a shape grown dominantly to have greater thicknesses in two opposite directions around the metal fibers 10W as indicated by the arrows G1 and G2. The bi-directional growth of the active material layer 200B may be achieved by rotating the arrangement direction of the nonwoven fabric type current collector by 180° during a sputtering process for depositing an active material layer. For example, after forming an active material layer that is thicker in the direction indicated by the arrow G1 via sputtering, the arrangement direction of the nonwoven fabric type current collector may be rotated by 180°, and an active material layer is formed again via sputtering, and thus an active material layer grown thicker in the directions indicated by the arrows G1 and G2 in a non-radiative shape may be obtained. The disclosure of Korean Patent Application No. 10-2014-0148783 (filed by the applicant of the present specification on October 29, 2014) may be referred to for detailed description thereof, where the disclosure thereof is considered as being incorporated herein by reference in its entirety.

In the above-described silicon-containing active material layers 200A and 200B, lithium ions of a rechargeable battery electrochemically react with a silicon-containing active material to form a $Li_xSi$ compound, and lithiation based on the reaction for forming the $Li_xSi$ compound occurs from surfaces of the silicon-containing active material layers 200A and 200B. In this case, the silicon-containing active material layer 200A includes a sharp interface between non-reacted silicon (pristine-Si) and a lithium compound ($Li_xSi$) layer. As the lithiation progresses, the lithium compound layer becomes larger. When the entire silicon particles are changed into the $Li_xSi$ compound, the electrochemical reaction ends.

In the silicon-containing active material layers 200A and 200B, a silicon inner layer and a lithium compound layer, which are not reacted during the lithiation process, exist together. As lithiation progresses, at a certain time point at which lithium compound layer surrounds the silicon particles, tensile hoop stress is formed in the lithium compound layer. The tensile hoop stress may be a major factor of surface cracks and destruction of silicon particles. However, since a silicon-containing active material is stronger against compression stress than tensile stress, it may be anticipated that, even when compression stress that is presumably 10 times higher than tensile hoop stress occurs, surface crack or destruction may hardly occur on a surface of a silicon-containing active material layer. Therefore, according to an embodiment of the present invention, formation of tensile hoop stress on a surface may be prevented or minimized during lithiation, thereby preventing surface cracks of a silicon-containing active material layer.

According to an embodiment, the circularity of the outer circumference of cross-sections of the silicon-containing active material layers 200A and 200B formed thicker in the direction G1 or the direction G1 and the direction G2 that is opposite to the direction G1 in non-radiative shapes may be in the range from 0.2 to 0.8. The circularity may be within 0.2 to 0.8.

The circularity of the outer circumference of each of the active material layers 200A and 200B is determined as a ratio of an area of an entire cross-section including cross-section of the metal fiber 10W and the cross-section of the attachment layer 100A with respect to the outer circumferential length of each of the active material layers 200A and 200B and may be expressed as Equation 1 below.

[Equation 1]

$$\text{Circularity} = \frac{2\sqrt{\pi A}}{p}$$

Where A denotes a sum of areas of cross-sections of a metal fiber, an attachment layer formed on the metal fiber, and a silicon-containing active material layer, and P denotes the outer circumferential length of the cross-section, that is, the outer circumferential length of the silicon-containing active material layer.

When the circularity is less than 0.2, the active material layer starts to be pulverized from a thinly deposited region due to a plurality of charges and discharges, and thus the lifetime of the active material layer may be deteriorated. On the contrary, when the circularity exceeds 0.8, cracks or fractures of the active material layers 200A and 200B may easily occur due to tensile stress applied to lithiated layers as described later. The formation of a SEI layer on the inner surfaces of the active material layer exposed due to the cracks or the fractures may be accelerated, and thus lifetime of a battery may be deteriorated.

The circularity may be measured by using commercially available software like ImageJ(R), e.g., Imagej136, from an image obtained from a scanning electron microscope. Alternatively, the circularity may be measured by using a flowparticle image analyzer called FPIA-3000(R) of SYSMEX (Kobe, Japan). According to embodiments of the present invention, as an silicon-containing active material layer formed via sputtering is grown in non-uniform fashion in a particular direction, thereby suppressing and reducing the tensile hoop stress. Therefore, cracks caused by a volume change and irreversible lifetime deterioration due to the same may be effectively improved.

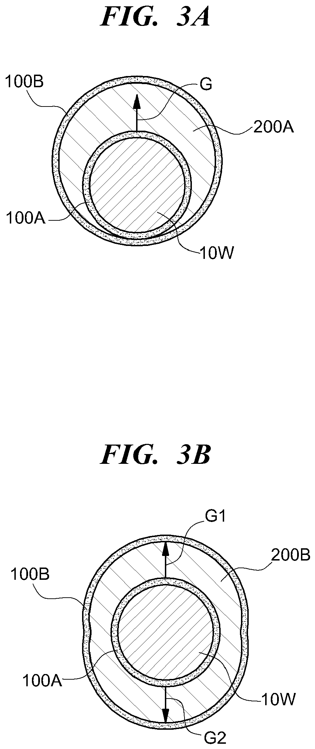

FIGS. 3A and 3B are diagrams showing cross-sectional structures of the metal fibers 10W for forming nonwoven fabric type current collectors according to other embodiments of the present invention, respectively.

Referring to FIG. 3A, an interface controlling layer 100B may be deposited on the silicon-containing active material layer 200A of the metal fiber 10W having deposited thereon the attachment layer 100A and the silicon-containing active material layer 200A of FIG. 1. Similar to the formation of the attachment layer 100A, the interface controlling layer 100B may be formed as reactive species or ionic species of the interface controlling layer 100B that are diffused or drifted through the pores (10P in FIG. 1) are deposited on the metal fiber 10W via a sputtering method using plasma. The interface controlling layer 100B may be formed on the metal fiber 10W from the surface of the nonwoven fabric type current collector (10 of FIG. 1) to the interior of the nonwoven fabric type current collector (10 of FIG. 1).

According to an embodiment, the interface controlling layer 100B may be deposited on the silicon-containing active material layer 200A alone without depositing the attachment layer 100A between the metal fiber 10W and the silicon-containing active material layer 200A and function as a shell layer for preventing volume expansion or crack of a lithium compound. The thickness of the interface controlling layer 100 may be in the range from 0.01 $\mu$m to 20 $\mu$m.

According to an embodiment, the interface controlling layer 100B may include a metal, an oxide of the metal, carbon, a carbon isotope, or a mixture thereof. The metal may be any one selected from a group consisting of tin (Sn), antimony (Sb), zinc (Zn), germanium (Ge), aluminum (Al), copper (Cu), bismuth (Bi), cadmium (Cd), magnesium (Mg), cobalt (Co), arsenic (As), gallium (Ga), lead (Pb), and iron (Fe) or an intermetallic compound thereof, where the carbon isotope may be fullerene, carbon nanotubes, or graphene. However, they are merely examples, and the present invention is not limited thereto.

Referring to FIG. 3B, the attachment layer 100A may be deposited on the metal fiber 10W, and the active material layer 200B may be deposited on the attachment layer 100A to be thicker in two opposite directions around the metal fiber 10W indicated by the arrows G1 and G2. The bi-directional growth of the active material layer 200B may be achieved by rotating the arrangement direction of the nonwoven fabric type current collector by 180° during a sputtering process for depositing an active material layer, as described above with reference to FIG. 2B. According to an embodiment, the interface controlling layer 100B may be deposited on the active material layer 200B alone without depositing the attachment layer 100A between the metal fiber 10W and the active material layer 200B, thereby preventing volume expansion or crack of a lithium compound.

According to an embodiment of the present invention, as formation of a solid electrolyte interface based on a contact between a silicon-containing active material layer and an electrolyte is suppressed or reduced by the interface controlling layer 100B, reduction of capacity due to the formation of the solid electrolyte interface and irreversibility thereof may be prevented, and thus an electrode for a high capacity secondary battery with improved lifetime may be provided.

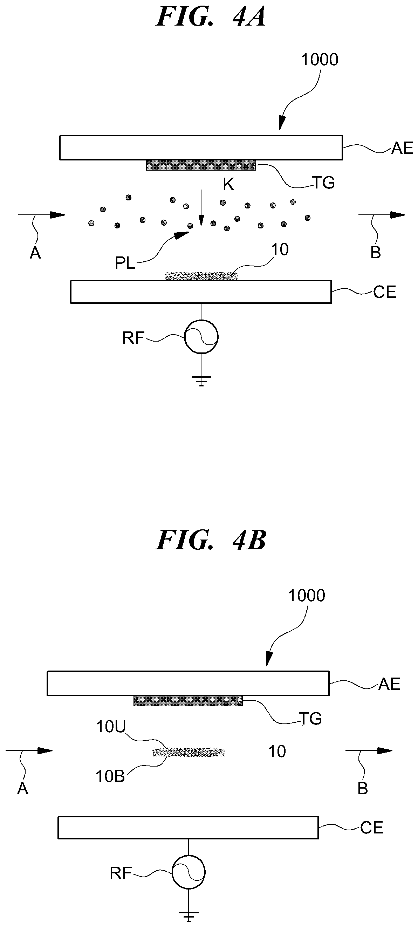

FIGS. 4A and 4B are diagrams showing a plasma reactor 1000 for performing methods of manufacturing electrodes for a secondary battery according to various embodiments of the present invention.

Referring to FIG. 4A, the plasma reactor 1000 may be a capacitive-coupled reactor having two electrodes for discharging gas, that is, an anode AE and a cathode CE. A sputtering target (TG) is placed in the plasma reactor 1000. The sputtering target TG may be a plastic body or a sintered body of silicon or a silicon compound containing the above-described active material. According to another embodiment, as the sputtering targets TG, a target including silicon and another target of another element for forming a silicon compound may be independently placed in the plasma reactor 1000 for co-sputtering.

According to an embodiment, the nonwoven fabric type current collector 10 may be disposed to face the sputtering target TG in the plasma reactor 1000. An inert discharge gas, such as argon, may be introduced into the plasma reactor 1000 at a controlled flux (arrow A) and the interior of the plasma reactor 1000 may be discharged (arrow B), thereby maintaining a constant pressure inside the plasma reactor 1000. According to some embodiments, a reactive gas, such as an oxidizing gas (e.g., oxygen or ozone) or a reducing gas (e.g., nitrogen or hydrogen), may be further supplied. Next, when an AC power source RF electrically coupled to the cathode CE is turned ON, a gas discharge is induced in the plasma reactor 1000, and thus plasma PL is formed.

The plasma PL may form an electric field from the anode AE toward the cathode CE as indicated by the arrow K and clusters, neutral species, or ion species of active materials from the active material target TG may be transferred toward the nonwoven fabric type current collector 10 and deposited on the metal fiber (10W of FIG. 1) of the nonwoven fabric type current collector 10. By controlling the diffusion of the clusters and neutral species or drifting of the ion species by adjusting a flux, a pressure, intensity of supplied power, and/or a distance between of electrodes in the plasma reactor 1000, the circularity of a cross-section of a silicon-containing active material layer deposited on the metal fiber may be controlled. When the linearity is intentionally increased for drifting the ion species, the circularity may decrease. On the contrary, when the linearity increases, the circularity may increase. According to an embodiment of the present invention, when the size of pores of the nonwoven fabric type current collector 10 is greater than the size of the sheath of the plasma PL, the linearity of the ion species may be maximized, thereby reducing the circularity.

Referring to FIG. 4B, the nonwoven fabric type current collector 10 may be levitated inside the plasma reactor 1000, such that all of major surfaces of the nonwoven fabric type current collector 10, that is, a top surface 10U and a bottom surface 10B of the nonwoven fabric type current collector 10 are exposed to the plasma PL. To this end, a supporting member (not shown) for fixing an end of the nonwoven fabric type current collector 10 may be provided inside the plasma reactor 1000.

In a method of manufacturing an electrode via sputtering according to the present invention, the process pressure inside a plasma reactor is not particularly limited, but it is in the range from $10^{-3}$ Torr to $10^{-7}$ Torr, may be in the range from $10^{-4}$ Torr to $10^{-6}$ Torr, and may preferably be $10^{-6}$ Torr. Generally, in the case of sputtering, as the process pressure increases, scattering of neutral species, ion species, or reactive species increases, and thus an electrode with uniform contacts may be formed. However, if the process pressure exceeds $10^{-3}$ Torr, sputtered ions are scattered too much. Therefore, density of the ion species may increase when the ion species are deposited, and thus the ion species may lose thermodynamic energy. On the contrary, when the process pressure is less than $10^{-7}$ Torr, ions are not sufficiently scattered, and thus a silicon-containing active material layer may not be formed.

At the time of sputtering, the temperature of the nonwoven fabric type current collector 10 is not particularly limited, but is in the range from 0°C to 200°C, may be in the range from 10°C to 90°C, and may preferably be in the range from 10°C to 80°C. Furthermore, an inert gas, such as argon gas, to be injected during sputtering according to the present invention may be supplied. The flux of the inert gas is not particularly limited, but is in the range from 1 cm3/min to 50 $cm^3$/min, may be in the range from 2 $cm^3$/min to 30 $cm^3$/min, and may preferably be in the range from 5 $cm^3$/min to 20 $cm^3$/min.

Although the plasma reactor described above is a capacitive-coupled reactor, it is merely an example, and embodiments of the present invention are not limited thereto. For example, a plasma reactor may have other plasma sources, such as inductively coupled plasma source, a magnetron plasma source, and an electromagnetic resonance plasma source, and, if necessary, may include a remote plasma source.

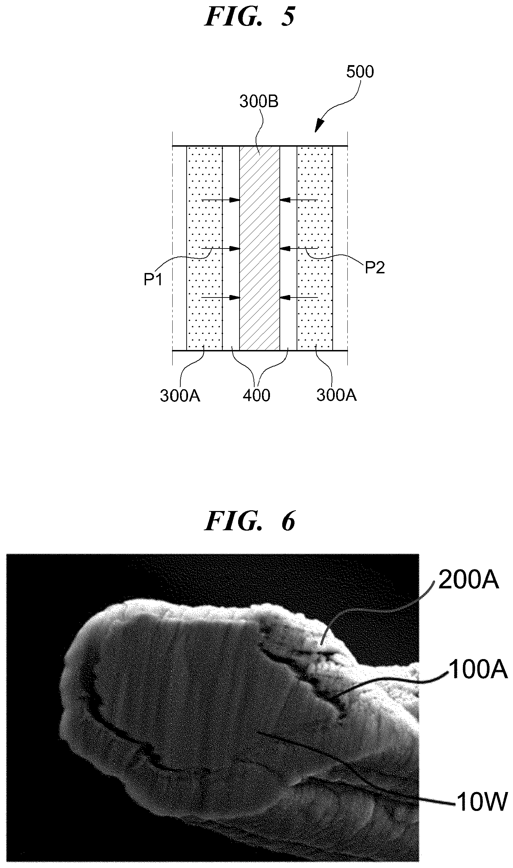

FIG. 5 is a cross-sectional diagram for describing an electrochemical reaction of a battery cell 500 employing an electrode according to an embodiment of the present invention.

Referring to FIG. 5, a positive electrode 300A including a nonwoven fabric type current collector layer and a silicon-containing active material layer as described above, and a negative electrode 300B having a polarity opposite to that of the positive electrode 300A may be stacked around a separating film 400 interposed therebetween, thereby forming a battery cell 500. Conductive tabs (not shown) may be coupled to first ends of the nonwoven fabric type current collector layer of the positive electrode 300A and the negative electrode 300B, respectively.

The separating film 400 for insulation between the positive electrode 300A and the negative electrode 300B may be a planar material layer, such as a polymeric microporous film, a woven fabric, a nonwoven fabric, a ceramic, an intrinsic solid polymer electrolyte film, a gel solid polymer electrolyte film, or a combination thereof. An electrolyte solution containing a salt, such as potassium hydroxide (KOH), potassium bromide (KBr), potassium chloride (KCL), zinc chloride ($ZnCl_2$), and sulfuric acid ($H_2SO_4$) may be absorbed to the electrodes 300A and 300B and/or the separating film 400, and thus the battery cell 500 may be completed.

An electrode in which a non-radiative active material layer is laminated on a nonwoven fabric type current collector according to the above embodiment and metal fibers thereof may be applied to the positive electrode 300A and/or the negative electrode 300B. Preferably, an electrode according to an embodiment of the present invention may be applied to the negative electrode 300B. FIG. 5 shows an embodiment in which a nonwoven fabric type current collector according to an embodiment of the present invention is applied to a negative electrode.

During charging/discharging, the negative electrode 300B may perform ion exchange with the two positive electrodes 300A facing the same as indicated by the arrows P1 and P2 by utilizing both major surfaces. For example, in the battery cell 500, the two positive electrodes 300A may share the negative electrode 300B, which is a single layer. Therefore, in case of charging the battery cell 500, lithium ions of the two positive electrodes 300A move to the both surfaces of the negative electrode 300B as indicated by the arrows PI and P2, thereby charging the battery cell 500. On the contrary, in case of discharging the battery cell 500, lithium ions move toward the positive electrodes 300A in two directions respectively opposite to the directions indicated by the arrows P1 and P2, thereby discharging the battery cell 500.

According to an embodiment of the present invention, the number of separating films to be used may be reduced as compared to the case where an electrode structure including a metal foil current collector and an electrically active material coated thereon is used, thereby improving the energy density. Furthermore, since the nonwoven fabric type electrode consisting of the metal fibers as described above and an active material layer bonded thereto may maintain their fibrous characteristics, they may be easily deformed and form a substantially uniform conductive network within the entire volume of the electrode. Therefore, even when the thickness is increased to control the capacity of a battery, the charging/discharging efficiency may be maintained or improved because there is no increase in the internal resistance unlike in a conventional battery structure obtained by coating an active material layer on a metal foil, and thus a high capacity battery may be provided.

Furthermore, due to its fibrous properties, an electrode according to an embodiment of the present invention may be 3-dimensional deformed. For example, an electrode according to an embodiment of the present invention may not only be wound, but also stacked, bent, and rolled and may have various volumes and shapes to be integrated with a battery other than a cylindrical battery as described above, such as a rectangular battery or a pouch-type battery, or a fabric product, such as a clothing or a bag. It will also be understood that an electrode according to an embodiment of the present invention may be applied to a flexible battery requiring excellent bending properties for a wearable device.

Hereinafter, the present invention will be described in more detail with reference to the following embodiments. However, the following embodiments are provided only for the purpose of exemplifying the present invention, and the scope of the present invention is not limited by the following examples.

<Embodiment 1>

A nonwoven fabric type current collector including metal fibers made of an alloy of iron, nickel, and/or chromium having an average diameter of 10 $\mu$m were placed on one side of a plasma reactor, and a carbon sputtering target was placed on another side of the plasma reactor opposite to the nonwoven fabric type current collector. A plasma source for the deposition of the attachment layer was a RF capacitive-coupled plasma source, the process pressure was $10^{-6}$ Torr, the process temperature was 25°C, and an attachment layer was deposited on the metal fibers of the nonwoven fabric type current collector by injecting argon gas at a flux of 15 $cm^3$/min for 2 hours. The thickness of the attachment layer was about 0.1 $\mu$m. FIG. 6 shows that the attachment layer 100A is deposited on the metal fiber 10W and the active material layer 200A including pure silicon is formed on the attachment layer 100A in a non-radiating shape. The thickness of the pure silicon active material layer 200A is 1 $\mu$m.

After replacing the silicon active material layer 200A with a sputtering target made of silicon in the plasma reactor, a negative electrode was manufactured by depositing a silicon active layer on the attachment layer under conditions identical to those under which the attachment layer 100A was deposited. Using the negative electrode, a battery was manufactured in a glove box in an argon gas atmosphere, and then electrochemical characteristics of the battery were evaluated.

[Embodiment 2]

Except an attachment layer formed on a nonwoven fabric type current collector, a silicon active layer was deposited by using the same method and conditions as in the Embodiment 1, and an interface controlling layer was deposited on the silicon active layer by using the same method as that used for depositing the attachment layer in the Embodiment 1, thereby manufacturing an electrode and a battery. Next, electrochemical characteristics of the battery were evaluated.

<Embodiment 3>

By using the same method and the same conditions as in the Embodiment 1, an attachment layer was deposited on a nonwoven fabric type current collector, a silicon active layer was deposited on the attachment layer, and an interface controlling layer was deposited on the silicon active layer under the same conditions as those under which the attachment layer was deposited, thereby manufacturing an electrode and a battery. Next, electrochemical characteristics of the battery were evaluated.

<Comparative Embodiment>

Except that no attachment layer and no interface controlling layer were deposited, a nonwoven fabric type current collector and a silicon active layer identical to those in the Embodiments 1 through 3 were formed, a battery was manufactured by using the same, and electrochemical characteristics of the battery were evaluated.

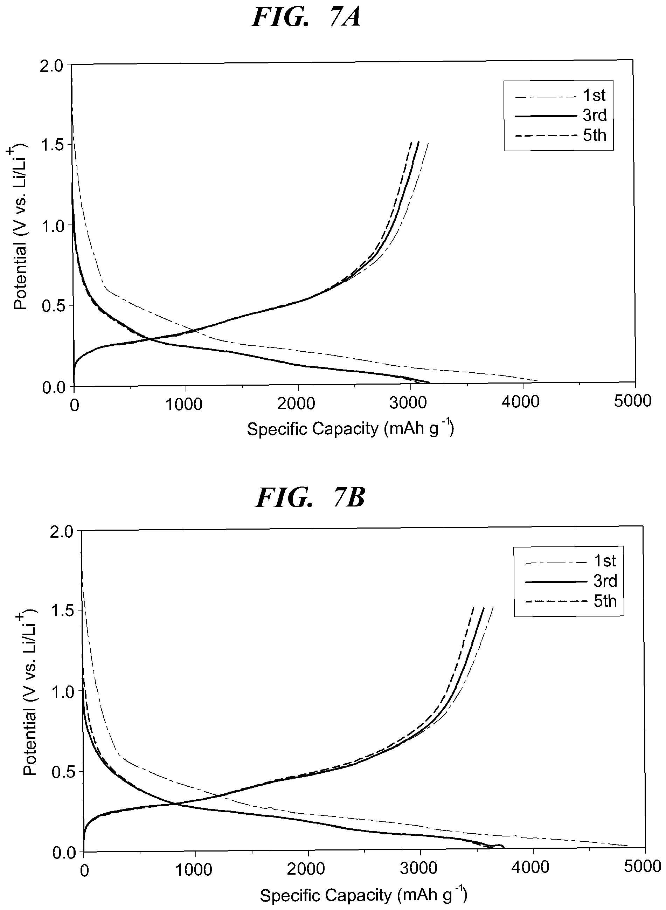

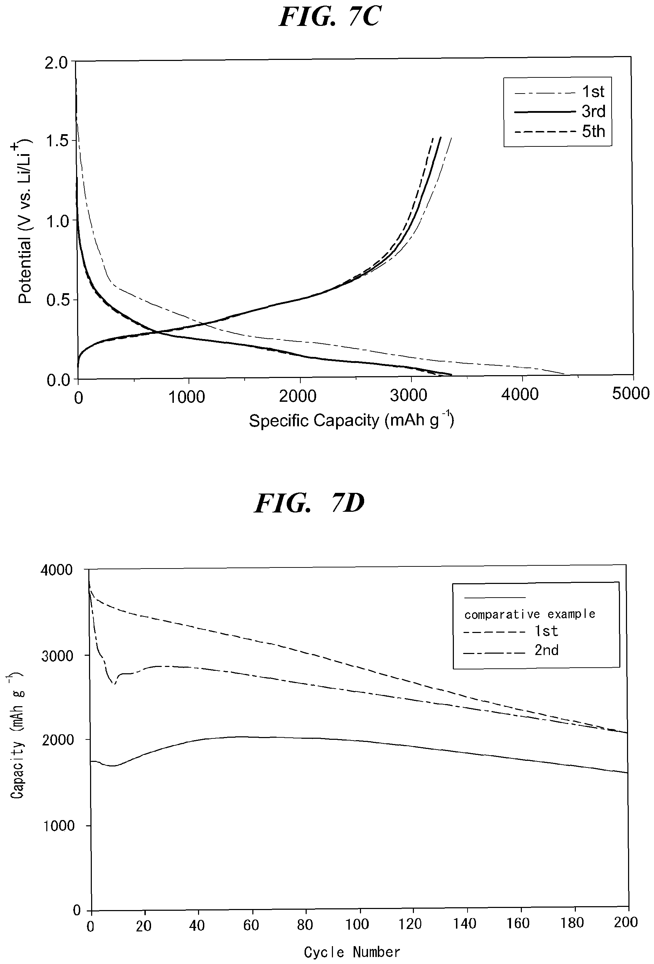

FIG. 7A is a graph showing a discharge characteristic measured by applying a constant current of 300 mA/g to the battery of the Embodiment 1, FIG. 7B is a graph showing a discharge characteristic regarding the Embodiment 2 under the same measurement condition, and FIG. 7C is a graph showing a discharge characteristic regarding the Comparative Embodiment under the same measurement condition. FIG. 7D is a graph showing lifetime characteristics of batteries according to the Embodiments 1 and 2 and the Comparative Embodiment. Table 1 shows the capacities and the efficiencies regarding the batteries measured in FIGS. 7A through 7D.

[Table 1]

|  | Initial Capacity (mAh/g) | Initial Efficiency (%) | Capacity After 200 Cycles (mAh/g) |
|---|---|---|---|
| Embodiment 1 | 3,500 | 75 | 2,000 |
| Embodiment 2 | 3,500 | 76 | 2,000 |
| Embodiment 3 | 3,500 | 80 | 2,000 |
| Comparative Embodiment | 3,000 | 65 | 1,500 |

Referring to FIGS. 7A through 7C and the initial capacities and initial efficiencies shown in Table 1, the batteries according to the Embodiments 1 through 3 exhibited capacities of at least about 16% larger than that of the battery according to the Comparative Embodiment. In Table 1, the initial efficiencies were 75% and 76% for the Embodiments 1 and 2, respectively, and the initial efficiency for the Embodiment 3 was 80%. Meanwhile, the initial efficiency for the Comparative Embodiment was only 65%. In other words, the efficiencies and the capacities of the batteries according to embodiments of the present invention were higher and the battery according to the Comparative Embodiment.

Referring to FIG. 7D and the post-200 cycle capacities in Table 1, in order to evaluate the lifetime characteristics of the batteries, same currents of 2,000 mA/g were applied to the batteries according to the Embodiments 1 and 3 and the Comparative Embodiment 1, respectively. The capacity of each of the batteries according to the Embodiments 1 through 3 was 200 mAh/g after 200 cycles of charging and discharging, whereas the capacity of the battery according to the Comparative Embodiment 1 was 1,500 mAh/g, which is about 500 mAh/g lower than that of the batteries according to the Embodiments 1 through 3.

While the present invention has been described in connection with what is presently considered to be practical exemplary embodiments, it is to be understood that the invention is not limited to the disclosed embodiments, but, on the contrary, will be apparent to those of ordinary skill in the art.

Claims

1. An electrode of a secondary battery, the electrode comprising:

a nonwoven fabric type current collector comprising a plurality of metal fibers that form continuous pores from a surface of the nonwoven fabric type current collector to the interior of the nonwoven fabric type current collector, are randomly arranged, and physically contact one another;
a silicon-containing active material layer formed on the metal fiber; and

an attachment layer between the metal fiber and the silicon-containing active material layer.

2. The electrode of claim 1, wherein the attachment layer comprises a metal layer, a metal compound layer, or a laminated structure thereof.

3. The electrode of claim 2, wherein the metal layer comprises any one selected from a group consisting of antimony (Sb), zinc (Zn), germanium (Ge), aluminum (Al), copper (Cu), bismuth (Bi), cadmium (Cd), magnesium (Mg), cobalt (Co), arsenic (As), gallium (Ga), lead (Pb), and iron (Fe) or an intermetallic compound thereof.

4. The electrode of claim 1, wherein the attachment layer comprises a carbon layer or a carbon isotropic layer.

5. The electrode of claim 2, wherein the carbon isotropic layer comprises fullerenes, carbon nanotubes, graphene, or graphite.

6. The electrode of claim 1, wherein the attachment layer has a thickness from 0.01 $\mu$m to 20 $\mu$m.

7. The electrode of claim 1, wherein the attachment layer is deposited via sputtering through the pores.

8. The electrode of claim 1, wherein the silicon-containing active material layer comprises silicon, any one selected from a group consisting of antimony (Sb), zinc (Zn), germanium (Ge), aluminum (Al), copper (Cu), bismuth (Bi), cadmium (Cd), magnesium (Mg), cobalt (Co), arsenic (As), gallium (Ga), lead (Pb), and iron (Fe), or a compound thereof.

9. The electrode of claim 1, wherein the silicon-containing active material layer is plasma-deposited, and the size of the pores is greater than the size of a sheath of plasma.

10. The electrode of claim 1, wherein the size of the pores is from 0.01 mm to 2 mm.

11. The electrode of claim 1, wherein the diameter of the metal fibers is from 1 $\mu$m to 200 $\mu$m.

12. The electrode of claim 1, wherein the metal fibers comprise any one of stainless steel, iron, aluminum, copper, nickel, chromium, titanium, vanadium, tungsten, manganese, cobalt, zinc, ruthenium, lead, iridium, antimony, platinum, silver, gold, and alloys thereof.

13. The electrode of claim 1, further comprising an interface controlling layer formed on the silicon-containing active material layer against an electrolyte.

14. The electrode of claim 13, wherein the interface controlling layer comprises any one of a metal, an oxide of the metal, carbon, and a carbon isotope or a mixture thereof.

15. The electrode of claim 14, wherein the metal comprises any one selected from a group consisting of tin (Sn), antimony (Sb), zinc (Zn), germanium (Ge), aluminum (Al), copper (Cu), bismuth (Bi), cadmium (Cd), magnesium (Mg), cobalt (Co), arsenic (As), gallium (Ga), lead (Pb), and iron (Fe) or an intermetallic compound thereof, and the carbon isotropic layer comprises fullerenes, carbon nanotubes, or graphene.

16. A method of manufacturing an electrode for a secondary battery, the method comprising:

providing a nonwoven fabric type current collector comprising metal fibers that form pores in a plasma reactor;
depositing an attachment layer on the metal fiber via the pores; and
depositing a silicon-containing active material layer on the attachment layer through the pores by using a sputtering method using plasma.

17. The method of claim 16, wherein the nonwoven fabric type current collector is levitated in the plasma reactor, such that all of major surfaces of the nonwoven fabric type current collector facing each other are exposed to plasma.

18. The method of claim 16, wherein the size of the pores is greater than the size of a sheath of plasma.

19. The method of claim 16, wherein the size of the pores is from 0.01 mm to 2 mm.

**20.** The method of claim 16, wherein an average diameter of the metal fibers is from 1 $\mu$m to 200 $\mu$m.

**21.** The method of claim 16, further comprising forming an interface controlling layer on the silicon-containing active material layer against an electrolyte.

## *FIG. 1*

*FIG. 2A*

G

200A

100A

10W

*FIG. 2B*

G1

200B

100A

10W

G2

# FIG. 3A

# FIG. 3B

## FIG. 4A

## FIG. 4B

## FIG. 5

## FIG. 6

## FIG. 7A

## FIG. 7B

## FIG. 7C

## FIG. 7D

## INTERNATIONAL SEARCH REPORT

International application No.

**PCT/KR2016/008990**

### A. CLASSIFICATION OF SUBJECT MATTER

*H01M 4/134(2010.01)i, H01M 4/62(2006.01)i, H01M 4/38(2006.01)i, H01M 4/139(2010.01)i, H01M 4/04(2006.01)i, H01M 4/80(2006.01)i*

According to International Patent Classification (IPC) or to both national classification and IPC

### B. FIELDS SEARCHED

Minimum documentation searched (classification system followed by classification symbols)

H01M 4/134; H01M 10/05; B82Y 40/00; H01M 4/64; H01M 10/052; H01M 4/70; H01M 4/62; H01M 4/38; H01M 4/139; H01M 4/04; H01M 4/80

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: metal fiber, non-woven type current collector, silicone containing active material layer, tie layer, carbon layer, sputtering, pore, plasma, interface control layer

### C. DOCUMENTS CONSIDERED TO BE RELEVANT

| Category* | Citation of document, with indication, where appropriate, of the relevant passages | Relevant to claim No. |
|---|---|---|
| Y | KR 10-2014-0026193 A (SAMSUNG SDI CO., LTD.) 05 March 2014 See paragraphs [0011], [0049], [0053], [0056], [0059], [0060], [0063], [0065]; example 2; claims 1, 11. | 1-21 |
| Y | WO 2015-108268 A1 (JENAX INC. et al.) 23 July 2015 See paragraph [0095]; claims 3, 6, 9, 11. | 1-21 |
| Y | XIAO, Qizhen et al., "A Multilayer Si/CNT Coaxial Nanofiber LIB Anode with a High Areal Capacity", Energy & Environmental Science, 2014, vol. 7, no. 2, pages 655-661 See figures 1(a)-1(f), 3(c). | 1-21 |
| A | KR 10-2014-0108380 A (MK ELECTRON CO., LTD. et al.) 11 September 2014 See the entire document. | 1-21 |
| A | KR 10-1065778 B1 (KOREA INSTITUTE OF SCIENCE AND TECHNOLOGY) 20 September 2011 See the entire document. | 1-21 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 DECEMBER 2016 (20.12.2016) | **20 DECEMBER 2016 (20.12.2016)** |

| Name and mailing address of the ISA/KR | Authorized officer |
|---|---|
| Korean Intellectual Property Office Government Complex-Daejeon, 189 Seonsa-ro, Daejeon 302-701, Republic of Korea Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/008990**

| Patent document cited in search report | Publication date | Patent family member | Publication date |
|---|---|---|---|
| KR 10-2014-0026193 A | 05/03/2014 | US 2014-0057171 A1 | 27/02/2014 |
| WO 2015-108268 A1 | 23/07/2015 | CN 105594020 A<br>EP 3012888 A1<br>JP 2016-529657 A<br>KR 10-1586557 B1<br>KR 10-2016-0066057 A<br>US 2016-0164071 A1 | 18/05/2016<br>27/04/2016<br>23/09/2016<br>20/01/2016<br>10/06/2016<br>09/06/2016 |
| KR 10-2014-0108380 A | 11/09/2014 | WO 2014-129720 A1 | 28/08/2014 |
| KR 10-1065778 B1 | 20/09/2011 | JP 2010-095797 A<br>JP 5599996 B2<br>KR 10-2010-0041567 A<br>US 2010-0092868 A1 | 30/04/2010<br>01/10/2014<br>22/04/2010<br>15/04/2010 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140148783